# EUROPÄISCHE PATENTSCHRIFT

(11) **EP 1 418 214 B1**
(45) Veröffentlichungstag und Bekanntmachung des Hinweises auf die Patenterteilung: **11.01.2006**
(21) Anmeldenummer: 03023422.3
(22) Anmeldetag: 17.10.2003
(51) Int. Cl.: C09J 7/04, B60J 11/00, B32B 27/12

(54) **Selbstklebender Schutzartikel für mechanisch stark beanspruchte lackierte Automobilteile**
Self-adhesive article for protection of painted automobile parts subjected to heavy loads
Article autoadhésive protecteur pour pièces automobiles peintes soumises à de fortes contraintes

(30) Priorität: 08.11.2002 DE 10252516
(43) Veröffentlichungstag der Anmeldung: 12.05.2004
(73) Patentinhaber: tesa AG, 20253 Hamburg (DE)
(72) Erfinder: Böhm, Nicolai, Dr., 20257 Hamburg (DE); Seitz, Karsten, Dr., 21614 Buxtehude (DE)

(56) Entgegenhaltungen:
- EP-A- 0 592 913
- EP-A- 0 959 119
- EP-A- 1 264 871
- DE-A- 10 009 851

## Beschreibung

Die Erfindung betrifft einen Selbstklebeartikel zum Transportschutz von lackierten Automobilteilen wie insbesondere Stoßfängern, die mechanisch stark beansprucht werden.

Die Lackierung von Automobilkunststoffteilen wie Stoßfängern oder Rückspiegelschalen in der Wagenfarbe gehört heutzutage zum Standard bei der zeitgemäßen optischen Gestaltung moderner Kraftfahrzeuge. Dies bringt mit sich, dass diese Teile sehr empfindlich gegen Zerkratzen sind. Gerade die Stoßfänger und die Rückspiegel sind exponierte Teile des Autos, die sehr leicht touchiert werden können. Dem gestiegenen Qualitätsbewusstsein der Kunden müssen die Automobilhersteller daher in der Weise Rechnung tragen, dass diese Teile auf dem Weg vom Lackieren über die Montage im Automobilwerk bis zur Auslieferung an den Kunden gut geschützt werden, um Reklamationen im Vorweg zu vermeiden.

Man hat daher in den letzten Jahren versucht, die bei frisch lackierten Blechteilen mit Erfolg angewendete Methode des Maskierens mit speziellen lackverträglichen Transportschutzfolien, wie sie zum Beispiel in DE 195 32 220 A1 oder in EP 0 827 526 A1 beschrieben sind, auf Stoßfänger zu übertragen.
Dieses erweist sich bei Stoßfängern als problematisch, da diese beim Rangieren der Automobile den häufig auftretenden starken Beanspruchungen durch Entlangschrammen und leichte Kollisionen nicht gewachsen sind und keine ausreichende Schutzwirkung vermitteln. Zudem lassen sich die relativ steifen Folien auf den stark gewölbten Verklebungsgeometrien der Stoßfänger und Spiegelschalen nur sehr faltig verkleben, was häufig, besonders begünstigt durch eventuelles allmähliches Ausgasen von Lösungsmitteln aus dem Stoßfängerkunststoff, zu irreversiblen Abdrücken der Faltenstruktur in den empfindlichen Lack führt.
Eine verbesserte Schutzwirkung gegen Stoßbelastungen haben dagegen auf die Stoßfänger geklebte Polster aus Schaumstoff. Schäume zeigen allerdings bei schrammender Kollision zum Beispiel an Betonpfählen nur eine geringe mechanische Resistenz.
Das Hauptproblem liegt hier aber vornehmlich in der sicheren Verklebung. Die Praxis hat gezeigt, dass die Polster häufig schon unter Regeneinfluss abfallen und damit zum einen keine Schutzwirkung mehr entfalten und zum anderen die Umwelt verschmutzen. Verklebungssicherere Klebstoffe erweisen sich in der Regel als nicht lackverträglich, so dass man irreversible Deformationen in Kauf nehmen muss.

In EP 0 979 254 B1 ist für den Stoßfängerschutz ein Abdeckmaterial auf Cellulosegewebebasis offengelegt, das mit einer Polyisobutylenselbstklebemasse ausgerüstet ist. Ein solcher Träger bietet eine gute mechanische Schutzwirkung und den Vorteil einer leichten, längs der Webfäden geraden Handeinreißbarkeit.
Als nachteilig stellt sich jedoch der Polyisobutylenkleber dar, der unter Feuchteeinfluß einen so starken Haftkraftveriust auf Kraftfahrzeuglacken erleidet, dass sich das Abdeckmaterial zum Teil vom Haftgrund ablöst. Es ist dann zum einen nicht wieder aufklebbar und gewährleistet zum anderen in dieser Form auch keinen Schutz mehr. Vielmehr führt es unter Umständen gar zur Zerstörung der zu schützenden Lackflächen, da es im Fahrtwind gegen den Lack schlagen und zusammen mit von der Klebmasse aufgenommenen Sand wie ein Schleifmittel wirken kann.

In EP 0 959 119 A1 wird ein selbstklebender Schutzartikel beschrieben, der aus einem Folien/Vlieslaminat besteht. Zwar weist auch ein solcher Artikel eine gute Schutzwirkung gegen Reibbelastungen auf. Vliese wie dort ausgeführt sind im allgemeinen aber wenig dehnfähig, weshalb ein solchermaßen beanspruchtes Laminat nur sehr faltig aufzubringen und somit wenig lackverträglich ist. Darüber hinaus lassen sich Vliese und Laminate aus diesen mit Folien nur schlecht kantengerade von Hand einreißen, was die manuelle Verarbeitung erschwert.

Ähnliches gilt für das in DE 100 09 851 C2 angeführte Abdeckmaterial, das aus einem nicht gewebten beziehungsweise gewirkten textilen Träger, einem perforierten Material oder einem Schaum besteht und mit Polyisobutylen- oder Polyethylenvinylacetatkleber ausgerüstet ist. Zwar ist ein gewirkter Stoff sehr flexibel, aber er ist schlecht von Hand einreißbar.

Aufgabe der Erfindung ist es, einen Transportschutzartikel für Stoßfänger und andere lackierte Kunststoffanbauteile für Automobile zur Verfügung zu stellen, der die Nachteile des Standes der Technik nicht oder nicht in dem Maße zeigt. Insbesondere soll der Artikel einerseits gut anschmiegsam an gewölbte Oberflächen, andererseits bei allen Wetterbedingungen sicher haftend sein. Dabei ist gleichzeitig eine große Abriebbeständigkeit sowie eine gute Verarbeitung von Hand, also ohne fremde Hilfsmittel gefordert, so dass eine hervorragende mechanische Schutzwirkung und ein praktikables Handling mit einer ausgezeichneten Lackverträglichkeit auf dem besonders empfindlichen Lack solcher Teile verbunden wird.

Gelöst wird diese Aufgabe durch einen Selbstklebeartikel, wie er im Hauptanspruch niedergelegt ist. Gegenstand der Unteransprüche sind dabei vorteilhafte Weiferbildungen des Schutzartikels sowie besondere Anwendungsmöglichkeiten.

Demgemäss betrifft die Erfindung einen Selbstklebeartikel zum Transportschutz von lackierten Automobilteilen wie insbesondere Stoßfängern, die mechanisch stark beansprucht werden, mit einem Gewebe als Trägermaterial, das zumindest und vorzugsweise einseitig mit einer Selbstklebemasse aus Polyethylenvinylacetat ausgerüstet ist, wobei das Gewebe aus Baumwolle oder Zellwolle besteht und ein Flächengewicht von 30 bis 300 g/m² aufweist.

Bevorzugt ist das Gewebe mit 20 bis 200 g/m² Flächengewicht, insbesondere bevorzugt mit 50 bis 150 g/m², Flächengewicht Selbstklebemasse basierend auf Polyethylenvinylacetat beschichtet.

Die Breite des Selbstklebeartikels richtet sich nach dem Anwendungsfall. Dieser kann die Breite eines üblichen Klebebandes aufweisen (zwischen 12 und 50 mm), als Schutzartikel für Kraftfahrzeugstoßfänger zwischen 50 mm und 250 mm, für großflächige Anwendungen bis zu zwei Metern betragen.

Gewebe sind Gebilde, bei denen die Fläche durch das rechtwinklige Verkreuzen von zwei Fadensystemen (Kett- und Schussfäden) hergestellt wird. Diese lassen sich definitionsgemäß eindeutig von den Vliesen (Faserverbundstoffen), bei denen ein loser Faserflor durch Wärme, Nadelung, Nähen oder durch Wasserstrahlen verfestigt wird, und den Maschenwaren, bei denen ein oder mehrere Fäden durch Maschenbildung verbunden werden, abgrenzen.

Beispiele geeigneter Faserrohstoffe sind natürliche Fasern wie insbesondere Baumwolle oder Zellwolle, aber auch Wolle oder Seide sowie halbsynthetische Fasern wie Celluloseacetat und Mischfasern. Einsetzbar sind aber auch synthetische Fasern aus Polymerisaten wie Polyethylen, Polypropylen sowie deren Mischungen, Polyvinylchlorid, Polyvinylidendichlorid oder Polyacrylnitril, Polykondensate wie Polyamid, auch Aramid, oder Polyester. Auch anorganische Fasern wie Glasfasern sind zu nennen.
Die Stoffauswahl muss unter Abwägung besonderer Anforderungen an den Artikel, insbesondere Beständigkeit gegen UV-Licht für die Dauer der Anwendung und Einreißbarkeit von Hand erfolgen.

Aus optischen Gründen können die Gewebe auch gefärbt sein.

Erfindungsgemäß hervorragend geeignet sind Gewebe mit 30 bis 300 g/m² Flächengewicht, bevorzugt 80 bis 180 g/m².

Die Fadenzahlen (Kett- und Schussfaden) sind prinzipiell beliebig zu wählen. Zur Verwirklichung der Erfindung kommt es auf das Verhältnis von Fadenzahl zu Faserfeinheit an. Erfindungsgemäß wird ein Gewebe eingesetzt, das so dicht ist, dass die Masse nicht durchschlägt, und das eine ausreichende mechanische Schutzwirkung bei der Anwendung vermittelt.

Vor oder nach dem Beschichten mit der Selbstklebemasse beziehungsweise dem Haftkleber kann das Gewebe bei der bevorzugten einseitig beschichteten Ausführungsform auf der dem Kleber abgewandten Seite behandelt werden, um entweder die Abrollkraft des später auf sich selbst zur Rolle aufgewickelten Schutzartikels zu beeinflussen - in der Regel zu erniedrigen - oder um es gegen Feuchtigkeitsaufnahme zu imprägnieren. Dies kann geschehen mit Lösungen, Dispersionen oder Reaktivmischungen, letzteres auch "Hundert Prozent Systeme" genannt, von Wirkstoffen mit dehäsiven beziehungsweise hydrophoben Eigenschaften. Besonders sind Silicone und fluorierte Polymere oder Mischungen aus Siliconen und fluorierten Polymeren mit Polyacrylaten oder Polyurethanen zu nennen, wobei letztere sowohl ausreagierte Polyurethanformulierungen als auch 2K-Reaktivsysteme beinhalten, in denen die hydrophoben Substanzen eingemischt oder chemisch eingebunden sein können. Ebenfalls geeignet sind niedermolekulare Stoffe wie Fette oder Wachse. Als dehäsiv wirkende Substanz zur Regulierung des Abrollverhaltens kommt auch Polyvinylstearylcarbamat in Frage.

Sodann kann die der Klebemasse abgewandte Seite des Trägermaterials zwecks Optimierung der Eigenschaften mit Folien und/oder mit bekannten textilen Trägern wie Geweben, Gewirken, Gelegen oder Vliesen ausgerüstet sein. Das Trägermaterial besteht in diesem Fall aus einem zwei- oder mehrschichtigen Laminat.

Zur Erzielung eines verbesserten Verbundes zwischen Gewebe und Klebmasse kann optional die der Klebmasse zugewandte Gewebeseite vor der Beschichtung mit der Klebmasse mit einem Haftvermittler behandelt werden. Bei geeigneten Faserrohstoffen leistet zur Verbesserung der Haftung zwischen Gewebe und Kleber auch eine physikalische Vorbehandlung der Folie wie Coronaentladung oder die Flammvorbehandlung gute Dienste.

Der erfindungsgemäße Selbstklebeartikel ist beschichtet mit einem Basispolymer aus Polyethylenvinylacetat (EVA) mit einem Vinylacetatanteil von 40 bis 90 Gew.-% und in einer hervorragenden Ausgestaltung des Erfindungsgegenstands einem Schmelzindex MFI nach ISO 1133 (A/4) von 0,5 bis 25 g/10 min bei 190 °C und 2,16 kg.
Da es sich um ein chemisch unvernetztes Polymergerüst handelt, das aufgrund seines Monomerverhältnisses nur sehr schwach bis gar nicht kristallin ist, nimmt das Molekulargewicht, das direkt mit dem MFI korreliert, eine entscheidende Stellung in Bezug auf die Kohäsivität der Klebmasse ein. Ein MFI von 1 bis 5 g/10 min bei 190°C und 2,16 kg hat sich dabei als günstiger Wert erwiesen. Die Zumischung eines Teils des EVA mit einem MFI von bis zu 25 kann aber zur Fließeigenschaftsverbesserung beitragen, wenn die Klebmasse aus der Schmelze aufgebracht wird.

Dieser Klebmassengrundstoff erweist sich als über Monate freibewitterbar, ohne sich zu zersetzen, haftet aufgetragen auf ein Gewebe auch unter feuchten Klimabedingungen auf lackierten Haftgründen unerwartet sicher und lässt sich rückstandsfrei wieder von diesen lösen.

Eine Strahlenvernetzung nach der Aufbringung der Klebmasse, insbesondere durch Elektronenstrahlhärtung, ist zur Steigerung der Kohäsion und zur Vermeidung von schrumpfbedingten Rückständen möglich.

Die Klebmasse kann zur Erzielung ergänzender gewünschter Eigenschaften abgemischt sein mit einem oder mehreren Additiven wie Klebharzen, Weichmachern, Alterungsschutzmitteln oder Füllstoffen.

Klebharze zur Steigerung der adhäsiven Eigenschaften des Klebers sind beispielsweise Kohlenwasserstoffharze (zum Beispiel aus ungesättigten C₅- oder C₇-Monomeren), Terpenphenolharze, Terpenharze aus Rohstoffen wie α- oder β-Pinen, aromatische Harze wie Cumaron-Inden-Harze oder Harze aus Styrol oder α-Methylstyrol, bevorzugt aber Kolophonium und seine Folgeprodukte wie disproportionierte, dimerisierte oder veresterte Harze, wobei Glycole, Glycerin oder Pentaerythrit zur Veresterung eingesetzt werden können sowie weitere wie aufgeführt in Ullmann's Enzyklopädie der technischen Chemie, Band 12, Seiten 525 bis 555 (4. Auflage), Weinheim. Besonders geeignet sind alterungsstabile Harze ohne olefinische Doppelbindung wie zum Beispiel hydrierte Harze.

Optional zu verwendende Weichmacher sind beispielsweise aliphatische, cycloaliphatische und aromatische Mineralöle, Di- oder Poly-Ester der Phthalsäure, Trimellitsäure oder Adipinsäure, Polyether sowie flüssige Kautschuke (zum Beispiel Nitril- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone.

Um die Klebmasse noch beständiger gegen UV-Einfluß zu machen, ist der Zusatz von Lichtschutzmittein möglich. Ihre Funktion besteht vorrangig in der Vermeidung der Zersetzung der Klebmasse. Insbesondere HALS-Lichtschutzmittel wie zum Beispiel Dimethylsuccinat-Polymer mit 4-Hydroxy-2,2,6,6-tetramethyl-1-piperidinethanol (CAS-Nr. 65447-77-0), Bis(2,2,6,6-tetramethyl-4-piperidinyl)sebacat (CAS-Nr. 52829-07-9) oder Poly[[6-[(1,1,3,3-tetramethyl butyl) amino]-1,3,5-triazine-2,4-diyl][[(2,2,6,6-tetramethyl-4-piperidyl) imino] hexamethylene [(2,2,6,6-tetramethyl-4-piperidyl) imino]] (CAS-Nr. 70624-18-9) sind für die erfindungsgemäße Klebmasse geeignet.

Geeignete Füllstoffe und Pigmente sind beispielsweise Ruß, Titandioxid, Calciumcarbonat, Zinkcarbonat, Zinkoxid, Silicate oder Kieselsäure.

Der erfindungsgemäße Selbstklebeartikel kann auf verschiedenen Wegen hergestellt werden.

Einerseits kann dies geschehen durch Beschichtung des Gewebes aus einer Lösung der erfindungsgemäßen Klebmasse oder durch Beschichtung aus der Schmelze, wobei letzteres durch Extrudieren oder durch Kalandrieren erfolgen kann.
Als dritter Weg kann die Klebmasse im Transferverfahren auf das Gewebe aufgebracht werden. Dabei wird die Klebmasse zunächst aus Lösung oder als Schmelze auf einen intermediären Träger aufgetragen und anschließend durch einen Kaschierschritt mit dem Gewebe verbunden.
Die Klebmasse kann in einem, vorteilhaft aber auch in mehreren Schritten aufgebracht werden. So können die in verschiedenen Schritten aufgebrachten Klebmasseschichten unterschiedliche Funktionen ausüben, indem sie unterschiedlich additiviert sind.

So kann etwa der Basisauftrag auf das Gewebe mit einem lichtabsorbierenden Pigment, zum Beispiel Ruß, versehen sein, und so die in weiteren Schritten aufgebrachte Klebmasse vor direkter Strahlung schützen. Wahlweise kann auch die Abschlussschicht, die Kontakt zum Haftgrund hat, mit Klebharzen abgemischt sein, während die Basisschicht nicht oder anders additiviert ist. Oben genannte Beispiele stellen keine Einschränkung dar, sondern stehen stellvertretend für alle denkbaren Kombinationen, die im Sinne des Erfindungsgedanken sind.

Bei lackierten Kunststoffteilen mit einem hohen Restlösungsmittelgehalt im Lack, etwa bedingt durch niedrige Trockentemperaturen, kann es vorteilhaft sein, den Artikel, insbesondere die Klebmasse, zum Zweck einer besseren Gasdurchlässigkeit zu perforieren.

Der Selbstklebeartikel kann sowohl in Form einer Rolle, also in Form einer archimedischen Spirale auf sich selbst aufgerollt, als auch klebmasseseitig eingedeckt mit Trennmaterialien wie siliconisiertem Papier oder siliconisierter Folie hergestellt werden. Letzteres bietet sich besonders zum Herstellen von entsprechend dem Anwendungszweck formgestanzten Aufklebern an.

Ein derartig ausgeführter erfindungsgemäßer Schutzartikel lässt sich faltenarm und somit lackverträglich auf die im allgemeinen gewölbten Oberflächen von automobilen Kunststoffanbauteilen wie einer Stoßstange aufbringen. Er erweist sich als haftungssicher auch bei feuchten Witterungsbedingungen wie etwa Regen oder Nebel. Durch die leichte Einreißbarkeit von Hand, die kein zusätzliches Werkzeug zum Ablängen erfordert, ist eine zeitsparende Verarbeitung gewährleistet. Die Rissstelle ist dabei glatt und kantengerade, bildet also keine Stellen, die den Beginn einer unerwünschten selbsttätigen Ablösung prädestiniert.

Von der Montage bis zur Auslieferung des fertigen Fahrzeugs an den Kunden vermittelt der Schutzartikel dabei eine ausgezeichnete Schutzwirkung gegen Kratzer und versehentliches Entlangschrammen an Hindernissen.

Der Schutzartikel lässt sich auch nach einer anwendungstypischen Freibewitterungszeit von einem halben Jahr rückstandsfrei vom Haftgrund abziehen. Der zu schützende lackierte Kunststoffkörper weist danach keine dauerhaften Veränderungen wie Verfärbungen und irreversible Lackdeformationen auf.

Auch im Fahrzeuginnenraum kann der erfindungsgemäß gestaltete Artikel seine Vorteile ausspielen, auch hier sind viele Oberflächen vorübergehend oder dauerhaft gegen äußere Einflüsse zu schützen.

Der erfindungsgemäße Selbstklebeartikel ist in seiner Anwendung in keinster Weise eingeschränkt. Er kann zum Schutz von insbesondere stoß- und kratzempfindlichen Oberflächen wie Lack-, Metall-, Kunststoff- oder Glasoberflächen dienen, auch außerhalb der Automobilindustrie.
Immer wenn temporärer Schutz unter widrigen Bedingungen erwünscht wird, kommen die Vorzüge voll zur Geltung.

Im folgenden soll die Erfindung anhand von Beispielen erläutert werden, ohne diese damit allerdings einschränken zu wollen.

### Beispiele

### Beispiel 1

Ein Baumwollgewebe (Feinheit der Faser 200 dtex, Fadenzahl Kette 30 1/cm, Fadenzahl Schuss 28 1/cm) wird mit der Lösung einer Selbstklebemasse in Toluol bestehend aus einem Polyethylenvinylacetat mit einem Vinylacetatanteil von 60 Gewichtsprozent in zwei nacheinanderfolgenden Beschichtungs- und Trocknungsvorgängen so beschichtet, dass im ersten Arbeitsgang 40 g/m² und im zweiten nochmals 80 g/m², zusammen also 120 g/m², auf das Gewebe aufgebracht werden.

### Beispiel 2

Der Schutzartikel entspricht demjenigen aus Beispiel 1, allerdings wurde in Abweichung dazu ein Zellwollgewebe (Feinheit der Faser 200 dtex, Fadenzahl Kette 30 1/cm, Fadenzahl Schuss 28 1/cm) verwendet.

### Beispiel 3

Der Schutzartikel entspricht demjenigen aus Beispiel 1, allerdings wurde in Abweichung dazu der erste Beschichtungs- und Trocknungsvorgang mit der Lösung einer Selbstklebemasse in Toluol bestehend aus einem Polyethylenvinylacetat mit einem Vinylacetatanteil von 60 Gewichtsprozent, der 10 Gewichtsprozent Ruß bezogen auf den Polymeranteil zugemischt war, durchgeführt.

### Beispiel 4

Der Schutzartikel entspricht demjenigen aus Beispiel 1, allerdings wurde in Abweichung dazu der zweite Beschichtungs- und Trocknungsvorgang mit der Lösung einer Selbstklebemasse in Toluol bestehend aus einem Polyethylenvinylacetat mit einem Vinylacetatanteil von 60 Gewichtsprozent, der 20 Gewichtsprozent bezogen auf den Polymeranteil eines perhydrierten Kolophoniumpentaerythritesters mit einem Erweichungspunkt von 105 °C zugemischt war, durchgeführt.

### Beispiel 5

Der Schutzartikel entspricht demjenigen aus Beispiel 1, allerdings wurde in Abweichung dazu die Rückseite das Gewebe nach der Beschichtung mit Polyurethanlösung, die mit 5 % eines Polydimethylsiloxanöls vermischt war, imprägniert.

### Beispiel 6

Der Schutzartikel entspricht demjenigen aus Beispiel 1, allerdings wurde in Abweichung dazu die gesamte Klebmasse in einem einzigen Arbeitsgang mit Hilfe eines Schmelzwalzenkalanders aufgetragen.

### Vergleichsbeispiel 1

Der Schutzartikel entspricht demjenigen aus Beispiel 1, allerdings wurde in Abweichung dazu die Lösung einer Polyisobutylenmischung aus Oppanol B 10, Oppanol B 80 und Oppanol B 150 (BASF) im Verhältnis 10 : 60 : 30 in Benzin der Siedefraktion 60/95 verwendet.

### Vergleichsbeispiel 2

Der Schutzartikel entspricht demjenigen aus Beispiel 1, in Abweichung dazu wurde ein wasserstrahlverfestigtes Polyestervlies von 100 g/m² Flächengewicht verwendet.

### Vergleichsbeispiel 3

Der Schutzartikel entspricht demjenigen aus Beispiel 1, in Abweichung dazu wurde eine Kettwirkware aus Polyamid 6/6.6 mit einer Maschenzahl von 14 Maschen/cm in Maschinenlaufrichtung und 14 Maschenreihen/cm in Querrichtung mit einem Flächengewicht von 90 g/m² verwendet.

### Vergleichsbeispiel 4

Ein Polyethylenschaum mit einem Raumgewicht von 200 kg/m² und einer Dicke von 1,0 mm wurde so mit der in Beispiel 1 verwendeten Klebmasse beschichtet, dass ein Auftrag von 25 g/m² resultierte.

### Prüfkriterien

Es wurden vier anwendungstechnisch besonders relevante Kriterien für einen Schutzartikel für Kraftfahrzeugkunststoffanbauteile zur vergleichenden Beurteilung der Beispielmuster herangezogen:
1. Irreversible Lackdeformationen unter der beklebten Fläche
2. Haftbeständigkeit unter feuchtem Witterungseinfluss
3. Durchriebfestigkeit
4. Einreißbarkeit von Hand

Als Testhaftgrund wurden original lackierte Stoßfänger eines VW Golf IV ausgewählt. Die Muster der selbstklebenden Schutzartikel wurden in der Länge auf 30 cm und in der Breite auf 15 cm zurechtgeschnitten und auf die Eckpartien des Stoßfängers, die besonders stark dreidimensional gekrümmt sind, verklebt.

### Durchführung der Tests

### 1. Lackdeformationen

Der Stoßfänger wurde mit dem Testmaterial beklebt und in einer Wärmekammer über drei Tage bei 80 °C gelagert. Nach dem Abkühlen wurde der Prüfling entfernt und die Stoßfängeroberfläche visuell auf irreversible Veränderungen der Oberflächengüte des Lackes beurteilt.

Folgendes Punkteschema spiegelt den Grad der Lackbeeinträchtigung wider:
0 = nicht sichtbar
1 = kaum sichtbar
2 = schwach sichtbar
3 = deutlich sichtbar

### 2. Haftbeständigkeit unter feuchtem Witterungseinfluss.

Die verklebten Prüflinge wurden nach einer Stunde Verklebungszeit in ein Feuchtklima von 100 % relativer Feuchte und 40 °C Wärme überführt und nach 72 Stunden auf Ablösung beurteilt.

Das Ausmaß der Ablösungen wurde mit folgenden Schema beurteilt:
0 = keine Ablösung
1 = leichte Ablösung
2 = starke Ablösung
3 = Muster abgefallen

### 3. Durchriebfestigkeit.

Der Prüfling wurde auf eine Metallplatte geklebt und in einem Abriebtestgerät mit einem runden Prüfdorn, der mit 3 kg beschwert war, solange mit einer Frequenz von 1 Hz beansprucht, bis der Dorn Kontakt zur Metallplatte bekam.

### Beurteilungsschema:

0 = mehr als 200 Hübe
1 = 100 bis 200 Hübe
2 = 20 bis 100 Hübe
3 = unter 20 Hübe

### 4. Einreißbarkeit von Hand.

Die Muster wurden von drei Testpersonen quer zur Abwickelrichtung jeweils dreimal eingerissen respektive versucht einzureißen. Es wurde der Mittelwert der insgesamt neun subjektiven Bewertungen pro Muster ermittelt. Als Bewertungsschema für den Grad der Einreißbarkeit von Hand gilt:
0 = leicht einreißbar
1 = mittelmäßig einreißbar
2 = schwer einreißbar
3 = nicht einreißbar

### Ergebnisübersicht

Eine geringe Gesamtpunktzahl (Spalte Σ) bedeutet ein gutes anwendungstechnisches Gesamturteil.

| | Lackdeformationen in Fläche | Haftbeständigkeit bei Feuchte | Durchriebfestigkeit | Einreißbarkeit von Hand | Σ |
|---|---|---|---|---|---|
| Bsp. 1 | 1 | 0 | 0 | 0 | 1 |
| Bsp. 2 | 1 | 0 | 0 | 0 | 1 |
| Bsp. 3 | 1 | 0 | 0 | 0 | 1 |
| Bsp. 4 | 1 | 0 | 0 | 0 | 1 |
| Bsp. 5 | 1 | 0 | 0 | 0 | 1 |
| Bsp. 6 | 1 | 0 | 0 | 0 | 1 |
| Vergl. Bsp. 1 | 1 | 2 | 0 | 0 | 3 |
| Vergl. Bsp. 2 | 1 | 0 | 2 | 2* | 5 |
| Vergl. Bsp. 3 | 1 | 0 | 2 | 2* | 5 |
| Vergl. Bsp. 4 | 1 | 0 | 3 | 1 | 5 |

| | | | | | |
|---|---|---|---|---|---|
| * Rissbild außerdem nicht kantengerade und ausgefranst. | | | | | |

Die Auswertung zeigt deutlich, dass mit dem erfindungsgemäßen Produktaufbau exzellente Ergebnisse bei den entscheidenden anwendungstechnischen Tests erzielt werden.

Im Gegensatz zu den Vergleichsbeispielen handelt es sich bei den Beispielen um lackverträgliche, haftungssichere, abriebfeste und durch die leichte Einreißbarkeit von Hand gut verarbeitbare Schutzartikel, die daher gut geeignet sind für den zuverlässigen Schutz und Werterhalt lackierter Kunststoffanbauteile für Automobile.

## Patentansprüche

1. Selbstklebeartikel zum Transportschutz von lackierten Automobilteilen wie insbesondere Staßfängern, die mechanisch stark beansprucht werden, mit einem Gewebe als Trägermaterial, das insbesondere einseitig mit einer Selbstklebemasse aus Polyethylenvinylacetat ausgerüstet ist, wobei das Gewebe
aus Baumwolle oder Zellwolle besteht und
ein Flächengewicht von 30 bis 300 g/m² aufweist.

2. Selbstklebeartikel nach Anspruch 1, **dadurch gekennzeichnet, dass** das Gewebe mit 20 bis 200 g/m², bevorzugt mit 50 bis 150 g/m², Selbstklebemasse beschichtet ist.

3. Selbstklebeartikel nach Anspruch 1 oder 2. **dadurch gekennzeichnet, dass** das Gewebe ein Flächengewicht von 80 bis 180 g/m² aufweist

4. Selbstklebeartikel nach zumindest einem der Ansprüche 1 bis 3, **dadurch gekennzeichnet, dass** das Gewebe bei der bevorzugten einseitig beschichteten Ausführungsform auf der dem Kleber abgewandten Seite mit Lösungen, Dispersionen oder Reaktivmischungen und/oder die der Klebmasse zugewandte Gewebeseite vor der Beschichtung mit der Klebmasse mit einem Haftvermittler behandelt ist.

5. Selbstklebeartikel nach zumindest einem der vorherigen Ansprüche, **dadurch gekennzeichnet, dass** der Vinylacetatanteil im Polyethylenvinylacetatkleber 40 bis 90 Gewichtsprozent und/oder der Schmelzindex MFI nach ISO 1133 (A/4) des Polyethylenvinylacetatklebers 0,5 bis 25 g/10 min bei 190 °C und 2,16 kg betragen.

6. Selbstklebeartikel nach zumindest einem der vorherigen Ansprüche, **dadurch gekennzeichnet, dass** die Selbstklebemasse aus mehreren einzelnen Schichten aufgebaut ist.

7. Selbstklebeartikel nach zumindest einem der vorherigen Ansprüche, **dadurch gekennzeichnet, dass** der Selbstklebeartikel und insbesondere die Klebemasse perforiert ist.

8. Verwendung des Selbstklebeartikeis nach mindestens einem der vorhergehenden Anspruche als entsprechend dem Anwendungszweck in Form gestanzter Aufkleber.

9. Verwendung des Selbstklebeartikels nach mindestens einem der vorhergehenden Ansprüche zum Schutz von insbesondere stoß- und kratzempfindlichen Oberflächen wie Lack-, Metall-, Kunststoff- oder Glasoberflächen.

10. Verwendung des Selbstklebeartikels nach mindestens einem der vorhergehenden Ansprüche auf Insbesondere gewölbten Oberflächen von Automobilen.

11. Verwendung des Selbstklebeartikels nach mindestens einem der vorhergehenden Ansprüche auf gewölbten Flächen auf der Außenseite von Automobilen.

12. Verwendung des Selbstklebeartikels nach mindestens einem der vorhergehenden Ansprüche auf der Lackierung von Automobilkunststofftellen wie insbesondere Stoßfängern.

## Claims

1. Self-adhesive article for the transit protection of painted car components such as, in particular, bumpers, which are subject to high mechanical stress, having a woven as backing material which is provided on one side in particular with a polyethylene-vinyl acetate self-adhesive composition, the woven being comprised of cotton or viscose rayon staple and having a basis weight of from 30 to 300 g/m².

2. Self-adhesive article according to Claim 1, **characterized in that** the woven is coated with from 20 to 200 g/m², preferably from 50 to 150 g/m², of self-adhesive composition.

3. Self-adhesive article according to Claim 1 or 2, **characterized in that** the woven has a basis weight of from 80 to 180 g/m².

4. Self-adhesive article according to at least one of Claims 1 to 3, **characterized in that** in the case of the single-sidedly coated embodiment, which is preferred, the woven is treated on the side facing the adhesive with solutions, dispersions or reactive mixtures and/or the side of the woven facing the adhesive is treated with an adhesion promoter before being coated with the adhesive.

5. Self-adhesive article according to at least one of the previous claims, **characterized in that** the vinyl acetate fraction in the polyethylene-vinyl acetate adhesive is from 40 to 90 per cent by weight and/or the melt index MFI according to ISO 1133 (A/4) of the polyethylene-vinyl acetate adhesive is from 0.5 to 25 g/10 min at 190°C and 2.16 kg.

6. Self-adhesive article according to at least one of the previous claims, **characterized in that** the self-adhesive composition is composed of two or more individual layers.

7. Self-adhesive article according to at least one of the previous claims, **characterized in that** the self-adhesive article and in particular the adhesive is perforated.

8. Use of the self-adhesive article according to at least one of the preceding claims as adhesive die cuts corresponding in shape to the intended application.

9. Use of the self-adhesive article according to at least one of the preceding claims for protecting surfaces which are particularly sensitive to impact and scratching, such as paint, metal, plastic or glass surfaces.

10. Use of the self-adhesive article according to at least one of the preceding claims on surfaces, especially curved surfaces, of cars.

11. Use of the self-adhesive article according to at least one of the preceding claims on curved surfaces on the outside of cars.

12. Use of the self-adhesive article according to at least one of the preceding claims on the paint finish of plastic car components such as, in particular, bumpers.

## Revendications

1. Article autoadhésif pour la protection de transport de pièces automobiles peintes, comme en particulier des pare-chocs, soumises à de fortes contraintes mécaniques, au moyen d'un tissu en tant que matériau de support, muni en particulier sur une face d'une masse autoadhésive à base de poly(acétate de vinyle - éthylène), dans lequel le tissu consiste en coton ou en Fibranne et présente un poids surfacique de 30 à 300 g/m².

2. Article autoadhésif selon la revendication 1, **caractérisé en ce que** le tissu est enduit de masse autoadhésive à raison de 20 à 200 g/m², de préférence de 50 à 150 g/m².

3. Article autoadhésif selon la revendication 1 ou 2, **caractérisé en ce que** le tissu présente un poids surfacique de 80 à 180 g/m².

4. Article autoadhésif selon au moins l'une quelconque des revendications 1 à 3, **caractérisé en ce que** le tissu, dans la forme de réalisation préférée enduite sur une face, est traité sur la face opposée à l'adhésif, avec des solutions, des dispersions ou des mélanges réactifs, et/ou **en ce que** la face du tissu du côté de la masse adhésive est, avant l'enduction par la masse adhésive, traité par un promoteur d'adhérence.

5. Article autoadhésif selon au moins l'une quelconque des revendications qui précèdent, **caractérisé en ce que** la fraction d'acétate de vinyle dans l'adhésif de poly(acétate de vinyle - éthylène) est de 40 à 90% en poids et/ou **en ce que** l'indice de fusion MFI selon ISO 1133 (A/4) de l'adhésif de poly(acétate de vinyle - éthylène) est de 0,5 à 25 g/10 minutes à 190°C et sous 2,16 kg.

6. Article autoadhésif selon au moins l'une quelconque des revendications qui précèdent, **caractérisé en ce que** la masse autoadhésive est constituée de plusieurs couches individuelles.

7. Article autoadhésif selon au moins l'une quelconque des revendications qui précèdent, **caractérisé en ce que** l'article autoadhésif et en particulier la masse adhésive sont perforés.

8. Utilisation de l'article autoadhésif selon au moins l'une quelconque des revendications qui précèdent comme autocollant estampé en forme en fonction du but d'application.

9. Utilisation de l'article autoadhésif selon au moins l'une quelconque des revendications qui précèdent pour la protection, en particulier, de surfaces sensibles aux chocs et aux griffes, comme des surfaces peintes, de métal, de plastique ou de verre.

10. Utilisation de l'article autoadhésif selon au moins l'une quelconque des revendications qui précèdent, en particulier sur des surfaces bombées d'automobiles.

11. Utilisation de l'article autoadhésif selon au moins l'une quelconque des revendications qui précèdent sur des surfaces bombées extérieures d'automobiles.

12. Utilisation de l'article autoadhésif selon au moins l'une quelconque des revendications qui précèdent sur la peinture de pièces d'automobiles en plastique, comme en particulier des pare-chocs.
